# EUROPEAN PATENT APPLICATION

(11) **EP 2 896 677 A1**
(43) Date of publication of application: **22.07.2015**
(21) Application number: 12884603.7
(22) Date of filing: 11.09.2012
(51) Int. Cl.: C09K 11/87

(54) **LUTECIUM OXIDE LUMINESCENT MATERIAL AND PREPARATION METHOD THEREOF**

(71) Applicant: Ocean's King Lighting Science&Technology Co., Ltd., Guangdong 518054 (CN); Shenzhen Ocean's King Lighting Engineering Co. Ltd., Guangdong 518054 (CN)
(72) Inventor: ZHOU, Mingjie, Shenzhen Guangdong 518054 (CN); WANG, Rong, Shenzhen Guangdong 518054 (CN)
(74) Representative: Michalski Hüttermann & Partner Patentanwälte mbB
(86) International application number: PCT/CN2012/081241
(87) International publication number: WO 2014/040222

(57) **Abstract**

The present invention relates to a lutecium oxide luminescent material, having the general molarcular formula of Lu₂₋ₓO₃:Lnₓ³⁺@SiO₂@M_{y}, wherein Ln is selected from one of the elements Eu, Tb, Dy, Sm, Er, Ho and Tm; M is selected from at least one of Ag, Au, Pt, Pd and Cu metallic nanoparticles; 0<x≤0.02; y is the molar ratio between M and Lu₂₋ₓO₃:Lnₓ³⁺, 0<y≤10⁻²; @ represents coating; the lutecium oxide luminescent material uses M as a core, SiO₂ as an inner shell, and Lu₂₋ₓO₃:Lnₓ³⁺ as an outer shell. The lutecium oxide luminescent material is formed into a core-shell structure through the coating of at least one of Ag, Au, Pt, Pd and Cu metallic nanoparticles. The metallic nanoparticles can improve the internal quantum efficiency of the luminescent material, thus enabling the lutecium oxide luminescent material to have a relatively high luminous intensity.

## Description

### FIELD OF THE INVENTION

The present disclosure relates to the field of luminescent materials technology, and more particularly relates to a lutecium oxide luminescent material and preparation method thereof.

### BACKGROUND OF THE INVENTION

Field emission display (FED) devices have gained lots of concerns due to its excellent characteristics such as low operating voltage (200 to 5000V), low power consumption, high brightness, and the like. Since the principle of FED is similar to that of cathode ray tube (CRT), which is to use electron beam to bombard the light emitting material of the display, the most FED luminescent material currently is draw on conventional CRT phosphor type and to improve them. However, the working conditions of FED and CRT have a great difference, for example, the working voltage of CRT is higher (15kV to 30kV), while the working voltage of FED is lower (200V to 5kV). In order to obtain the potential advantages of luminous intensity, angle, response time, operating temperature range, power consumption, etc., there are a series of requirements for the luminescent materials, such as brightness, light color, brightness saturation, conductivity, stability, longevity, luminous efficiency and morphology. Under a particular 1.5kV voltage, if the luminescent material of CRT is applied directly to FED, the emission intensity will become low and the needs of use is difficult to meet. Therefore, how to improve the luminescent material under a low voltage is of great significance.

### SUMMARY OF THE INVENTION

Accordingly, it is necessary to provide a lutecium oxide luminescent material having a higher luminous intensity and a preparation method thereof.

A lutecium oxide luminescent material has the following chemical formula: Lu₂₋ₓO₃:Lnₓ³⁺@SiO₂@M_{y},

wherein Ln is one element selected from the group consisting of Eu, Tb, Dy, Sm, Er, Ho, and Tm;

M is at least one metal nanoparticles selected from the group consisting of Ag, Au, Pt, Pd, and Cu;

0<x≤0.02;

y is a molar ratio between M and Lu₂₋xO3:Lnₓ³⁺, 0<y≤10⁻²;

@ represents coating; the lutecium oxide luminescent material uses M as a core, SiO₂ as an inner shell, and Lu₂₋ₓO₃:Lnₓ³⁺ as an outer shell.

In one embodiment, 0.001≤x≤0.08.

In one embodiment, 1×10⁻⁵≤y≤5×10⁻².

A method of preparing a lutecium oxide luminescent material includes the following steps:

preparing a sol containing M, wherein M is at least one metal nanoparticles selected from the group consisting of Ag, Au, Pt, Pd and Cu;

surface-treating the sol containing M, then adding absolute ethanol and aqueous ammonia with stirring, then adding tetraethyl orthosilicate, reacting, separating and drying to obtain SiO₂ powder coating M;

preparing a ethanol aqueous solution containing Lu³⁺ and Ln³⁺ according to a stoichiometry ratio in a chemical formula: Lu₂₋ₓO₃:Lnₓ³⁺@SiO₂@M_{y}, adding citric acid and polyethylene glycol, stirring at a temperature of 60°C to 80°C for 2 to 6 hours to obtain a sol, adding the SiO₂ powder coating M, stirring for 2 to 12 hours to obtain a precursor sol, wherein Ln is one element selected from the group consisting of Eu, Tb, Dy, Sm, Er, Ho, and Tm; 0<x≤0.02;

drying the precursor sol to obtain a gel, grinding the gel, then heating the gel, cooling to obtain the lutecium oxide luminescent material having the following chemical formula: Lu₂₋ₓO₃:Lnₓ³⁺@SiO₂@M_{y}, wherein @ represents coating; the lutecium oxide luminescent material uses M as a core, SiO₂ as an inner shell, and Lu₂₋ₓO₃:Lnₓ³⁺ as an outer shell; y is a molar ratio between M and Lu₂₋ₓO₃:Lnₓ³⁺, 0<y≤10⁻².

In one embodiment, the preparing the sol containing M includes:

mixing and reacting a salt solution of at least one of Ag, Au, Pt, Pd, and Cu, an additive, and a reducing agent for 10 minutes to 5 minutes to obtain the sol containing M nanoparticles;

wherein a concentration of the salt solution of at least one of Ag, Au, Pt, Pd, and Cu ranges from 1 × 10⁻³ mol/L to 5×10⁻²mol/L;

the additive is at least one selected from the group consisting of polyvinyl pyrrolidone, sodium citrate, cetyl trimethyl ammonium bromide, sodium lauryl sulfate, and sodium dodecyl sulfate; a concentration of additive in the sol containing M ranges from 1×10⁻⁴g/mL to 5×10⁻² g/mL;

the reducing agent is at least one selected from the group consisting of hydrazine hydrate, ascorbic acid, sodium citrate, and sodium borohydride; a molar ratio of the reducing agent to a metal ion in the salt solution of at least one of Ag, Au, Pt, Pd, and Cu ranges from 3.6:1 to 18:1.

In one embodiment, the surface-treating the sol containing M includes:

adding the sol containing M to a polyvinyl pyrrolidone aqueous solution having a concentration of 0.005g/ml to 0.1g/ml and stirring for 8 to 18 hours.

In one embodiment, in the step of obtaining SiO₂ powder coating M, a volume ratio of absolute ethanol, ammonia, and tetraethyl orthosilicate ranges from 15 to 40:3 to 8:1 to 1.65.

In one embodiment, a volume ratio of ethanol to water in the ethanol aqueous solution ranges from 3 to 8:1;

a molar ratio of citric acid to a sum of Lu³⁺ and Ln³⁺ ranges from 1 to 5:1;

a concentration of polyethylene glycol ranges from 0.05g/mL to 0.20g/mL.

In one embodiment, the drying the precursor sol to obtain the gel comprises: drying the precursor sol at a temperature of 70°C to 150°C for 8 hours to 20 hours.

In one embodiment, the heating the gel comprises: preheating the ground gel at a temperature of 400°C to 600°C for 1 hour to 6 hours, and then calcining the gel at a temperature of 600°C to 1000°C for 2 hours to 8 hours.

In the lutecium oxide luminescent material, since Ag, Au, Pt, Pd and Cu nanoparticles are coated to form a core-shell structure, the internal quantum efficiency of the luminescent material is improved by the metal nanoparticles, such that the lutecium oxide luminescent material has a higher luminous intensity.

### BRIEF DESCRIPTION OF THE DRAWINGS

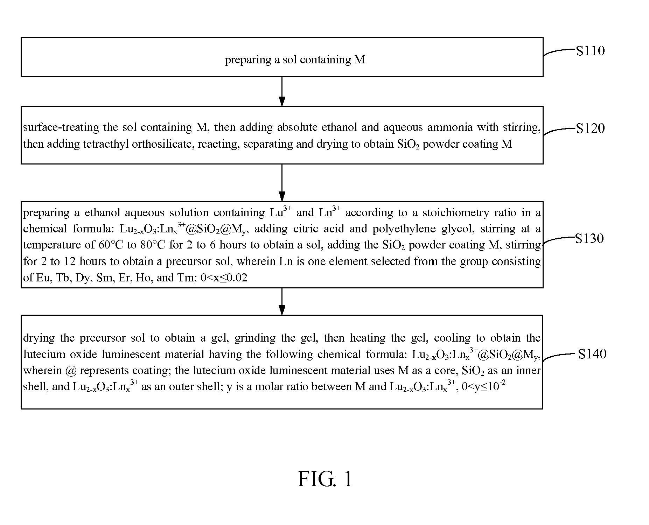

FIG. 1 is a flow chart of a method of preparing a lutecium oxide luminescent material in accordance with one embodiment;

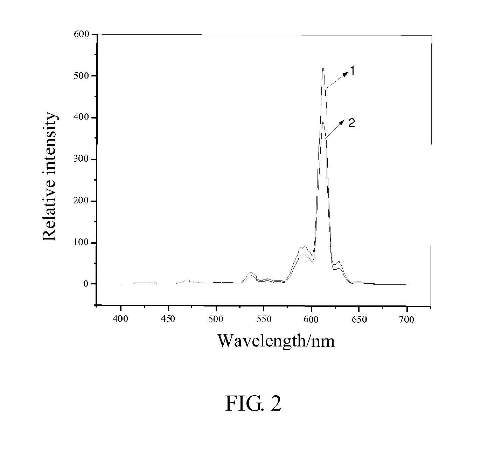

FIG. 2 is a graphical representation of cathodoluminescence spectrum under a voltage of 1.5kV of the luminescent material of Lu_{1.95}O₃: Eu_{0.05}³⁺@SiO₂@Au_{1×10}-₂ coating Au nanoparticles prepared in accordance with Example 1 and the luminescent material of Lu_{1.95}O₃: Eu_{0.05}³⁺@SiO₂ without coating Au nanoparticles;

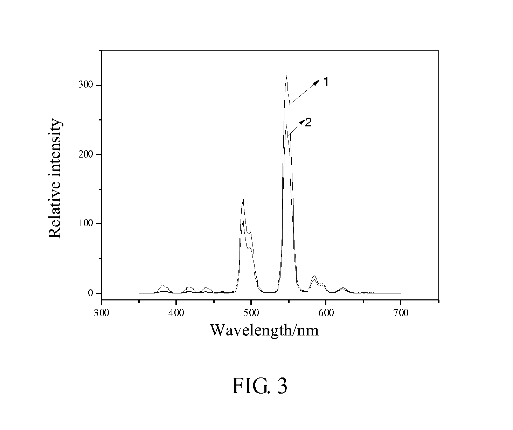

FIG. 3 is a graphical representation of cathodoluminescence spectrum under a voltage of 3kV of the luminescent material of Lu_{1.92}O₃:Tb_{0.08}³⁺@SiO₂@Ag_{2.5×10}-₄ coating Ag nanoparticles prepared in accordance with Example 3 and the luminescent material of Lu_{1.92}O₃:Tb_{0.08}³⁺@SiO₂ without coating Ag nanoparticles.

### DETAILED DESCRIPTION OF THE EMBODIMENTS

Reference will now be made to the drawings to describe, in detail, embodiments of the present lutecium oxide luminescent material and preparation method thereof.

An embodiment of a lutecium oxide luminescent material is provided having the following chemical formula: Lu₂₋ₓO₃:Lnₓ³⁺@SiO₂@M_{y},

wherein Ln is one element selected from the group consisting of europium (Eu), terbium (Tb), dysprosium (Dy), samarium (Sm), erbium (Er), holmium (Ho), and thulium (Tm);

M is at least one metal nanoparticles selected from the group consisting of silver (Ag), gold (Au), platinum (Pt), palladium (Pd), and copper (Cu);

0<x≤0.02, preferably 0.001≤x≤0.08;

y is a molar ratio between M and Lu₂₋ₓO₃:Lnₓ³⁺, 0<y≤10⁻², preferably 1×10⁻⁵≤y≤5×10⁻²;

":" represents doping, Lu₂₋ₓO₃:Lnₓ³⁺ is material formed by doping Lnₓ³⁺ into Lu₂₋ₓO₃, where Lnₓ³⁺ serves as the activate ion in the lutetium oxide luminescent material. Lnₓ³⁺ is doped in the Lu₂₋ₓO₃ substrate to replace partial Lu.

@ represents coating; the lutecium oxide luminescent material uses M as a core, SiO₂ as an inner shell, and Lu₂₋ₓO₃:Lnₓ³⁺ as an outer shell.

Since M serves as a core of the lutecium oxide luminescent material, it can cause the surface plasmon resonance effect, so as to improve the internal quantum efficiency of the lutecium oxide luminescent material.

The lutecium oxide luminescent material uses at least one metal nanoparticles Ag, Au, Pt, Pd, and Cu as the core, SiO₂ as the inner shell, and Lu₂₋ₓO₃:Lnₓ³⁺ which is formed by doping Ln³⁺ into the Lu₂O₃ substrate as the outer shell, thus forming a core-shell structure. The metal nanoparticles can improve the internal quantum efficiency of the luminescent material, such that the luminous intensity of the lutetium oxide luminescent material is increased.

The lutetium oxide luminescent material has a good luminescence performance, the emitted light by excitation exhibits a higher purity and brightness. Therefore, when the lutetium oxide luminescent material is applied to a field emission display device, it can improve the luminous intensity of the field emission display device.

The lu₂O₃ substrate has a good physical and chemical stability, and it can accommodate the plasma emission energy level of europium (Eu), terbium (Tb), dysprosium (Dy), samarium (Sm), erbium (Er), holmium (Ho), and thulium (Tm), such that the lutetium oxide luminescent material has a good stability.

A method of preparing a lutecium oxide luminescent material is provided including the following steps:

In step S110, a sol containing M is prepared.

M is at least one nanoparticle selected from the group consisting of Ag, Au, Pt, Pd and Cu.

The step of preparing the sol containing M includes: mixing and reacting a salt solution of at least one of Ag, Au, Pt, Pd, and Cu, an additive, and a reducing agent to obtain the sol containing M nanoparticles. In order to guarantee that the sol containing M is obtained, the reaction time is preferably ranged from 10 to 45 minutes to save energy. The salt solution of Ag, Au, Pt, Pd, and Cu can be a chloride solution, a nitrate solution or the like of the Ag, Au, Pt, Pd, and Cu. The concentration of the salt solution of Ag, Au, Pt, Pd, and Cu can be determined according to the actual needs, preferably ranges from 1 × 10⁻³mol/L to 5×10⁻²mol/L.

The additive is at least one selected from the group consisting of polyvinyl pyrrolidone, sodium citrate, cetyl trimethyl ammonium bromide, sodium lauryl sulfate, and sodium dodecyl sulfate. The concentration of additive in the sol containing M ranges from 1 × 10⁻⁴g/mL to 5×10⁻²g/mL.

The reducing agent is at least one selected from the group consisting of hydrazine hydrate, ascorbic acid, sodium citrate, and sodium borohydride. The reducing agent is firstly formulated into an aqueous solution with a concentration of 1×10⁻⁴mol/L to 1mol/L, then is mixed and reacted with the salt solution of at least one of Ag, Au, Pt, Pd, and Cu, and the additive.

A molar ratio of the reducing agent to a metal ion in the salt solution of at least one of Ag, Au, Pt, Pd, and Cu ranges from 3.6:1 to 18:1.

In step S120, the sol containing M is surface-treated, absolute ethanol and aqueous ammonia are then added. After the mixture system is well stirred, tetraethyl orthosilicate is added. The mixture system is then reacted, separated, and dried to obtain SiO₂ powder coating M.

For ease of coating, the sol containing M obtained from the step S110 is firstly surface-treated to form a stable SiO₂ powder coating M, referred hereafter as SiO₂@M.

Specifically, the step of surface-treating the sol containing M includes: adding the sol containing M to a polyvinyl pyrrolidone (PVP) aqueous solution having a concentration of 0.005g/ml to 0.1g/ml and stirring for 8 to 18 hours.

The metal nanoparticle M is coated using StOber method to form SiO₂ nanoparticles coating M. After the sol containing M is surface-treated, absolute ethanol and aqueous ammonia are added, and after the mixture system is well stirred, tetraethyl orthosilicate is added. After reacting for 2 to 8 hours, SiO₂@M nanoparticles are formed, which are then centrifuged, washed, and dried to obtain SiO₂ powder coating M, i.e., SiO₂@M powder.

Ethanol is used as a reaction solvent, and the water introduced by ammonia and the surface-treating can promote the hydrolysis of tetraethyl orthosilicate.

In order to increase the producing rate of the SiO₂@M nanoparticles and to obtain the SiO₂@M nanoparticles with uniform appearance, a volume ratio of absolute ethanol, ammonia, and tetraethyl orthosilicate ranges from 15-40:3-8:1-1.65.

In step S130, an ethanol aqueous solution containing Lu³⁺ and Ln³⁺ is prepared according to a stoichiometry ratio in a chemical formula: Lu₂₋ₓO₃:Lnₓ³⁺@SiO₂@M_{y}, citric acid and polyethylene glycol are added, stirred at a temperature of 60°C to 80°C for 2 to 6 hours to obtain a sol. The SiO₂ powder coating M is added, stirred for 2 to 12 hours to obtain a precursor sol, where Ln is one element selected from the group consisting of Eu, Tb, Dy, Sm, Er, Ho, and Tm; 0<x≤0.02.

The compounds containing Lu³⁺ and Ln³⁺ are resolved in an ethanol aqueous solution, followed by addition of citric acid and polyethylene glycol.

In alternative embodiment, the compounds containing Lu³⁺ and Ln³⁺ can be resolved in hydrochloric acid or nitric acid to form a solution of hydrochloric acid or nitric acid containing the compound of Lu³⁺ and Ln³⁺, then the solution is added into an ethanol aqueous solution, followed by addition of citric acid and polyethylene glycol. By this method, the compounds containing Lu³⁺ and Ln³⁺ can be fully resolved.

Ln is one element selected from the group consisting of Eu, Tb, Dy, Sm, Er, Ho, and Tm. The compound containing Lu³⁺ can be oxide, acetate or carbonate of Lu. The compound containing Ln³⁺ can be oxide, acetate or carbonate of Ln.

In the ethanol aqueous solution, the amount of water should not be too much, otherwise the sol is difficult to be formed. A volume ratio of ethanol and water is preferably 3 to 8: 1.

The citric acid serves as a chelating agent for chelating metal nanoparticles M. The molar ratio of citric acid to a sum of Lu³⁺ and Ln³⁺ ranges from 1 to 5:1.

An appropriate amount of polyethylene glycol is added to make sure the concentration of polyethylene glycol ranges from 0.05 to 0.20g/ml. The polyethylene glycol can prevent agglomeration of colloidal particles, thus improving the stability of colloidal particles. Preferably, the molarcular weight of polyethylene glycol ranges from 100 to 20000, more preferably from 2000 to 10000. The polyethylene glycol having a molarcular weight of 2000 to 10000 has a suitable viscosity, such that it can easily form a strong hydrogen bond with the surface of colloidal particles, thus forming a layer of macromolarcular hydrophilic film on the surface of the colloidal particles, improving the dispersibility of the particles and reducing the degree of aggregation of colloidal particles.

After stirring the mixture containing aqueous solution containing Lu³⁺ and Ln³⁺, the citric acid and the polyethylene glycol at a temperature of 60°C to 80°C for 2 to 6 hours, the SiO₂ powder coating M is added, stirred for 2 to 12 hours to obtain the precursor sol. The precursor sol is formed by SiO₂@M and metal chelates, which is obtained by chelating Lu³⁺ and Ln³⁺ using polyethylene glycol and citric acid.

In step S140, the precursor sol is dried to obtain a gel, the gel is ground and heated, cooled to obtain the lutecium oxide luminescent material having the following chemical formula: Lu₂₋ₓO₃:Lnₓ³⁺@SiO₂@M_{y}, where @ represents coating; the lutecium oxide luminescent material uses M as a core, SiO₂ as an inner shell, and Lu₂₋ₓO₃:Lnₓ³⁺ as an outer shell; y is a molar ratio between M and Lu₂₋ₓO₃:Lnₓ³⁺, 0<y≤10⁻².

The precursor sol is dried to remove solvent (ethanol and water) to obtain the gel. Preferably, the drying temperature ranges from 70°C to 150°C, and the drying time ranges from 8 hours to 20 hours.

The gel is ground and heated. The heating includes: preheating the ground gel at a temperature ranging from 400°C to 600°C for 1 to 6 hours, then calcining the gel at a temperature ranging from 600°C to 1000°C for 2 hours to 8 hours.

The gel is preheated at 400°C to 600°C to remove the citric acid and polyethylene glycol, then is calcined at 600°C to 1000°C for 2 hours to 8 hours to obtain the lutecium oxide luminescent material having the following chemical formula: Lu₂₋ₓO₃:Lnₓ³⁺@SiO₂@M_{y}, where @ represents coating; the lutecium oxide luminescent material uses M as a core, SiO₂ as an inner shell, and Lu₂₋ₓO₃:Lnₓ³⁺ as an outer shell; y is a molar ratio between M and Lu₂₋ₓO₃:Lnₓ³⁺, 0<y≤10⁻².

The preparation method described above firstly uses a sol-gel method to prepare SiO₂ powder coating M, i.e. SiO₂@M, then Lu₂₋ₓO₃:Lnₓ³⁺ is prepared coating the surface of the SiO₂@M, such that the lutecium oxide luminescent material having the following chemical formula: Lu₂₋ₓO₃:Lnₓ³⁺@SiO₂@M_{y} is obtained, where M serves as the core, SiO₂ as the inner shell, and Lu₂₋ₓO₃:Lnₓ³⁺ as the outer shell.

The preparation method has less process steps, simple process, low cost, non-polluting, and the reaction is easy to control, such that it can be widely used in the manufacture of luminescent materials. In addition, the obtained lutecium oxide luminescent material has a high quality without introducing other impurities; therefore the emitted light by excitation has a high light color purity and brightness.

The specific examples are described below.

### Example 1

This example describes a process of preparation of Lu_{1.95}O₃: Eu_{0.05}³⁺@SiO₂@Au_{1×10-2} by using sol-gel method.

Preparation of sol containing Au nanoparticles was described below.

20.6mg of chloroauric acid (AuCl₃•HCl•4H₂O) was dissolved in 16.8mL of deionized water. After the chloroauric acid was fully dissolved, 14mg of sodium citrate and 6mg of cetyl trimethyl ammonium bromide were weighed and dissolved into the chloroauric acid aqueous solution under magnetic stirring. 1.9mg of sodium borohydride and 17.6mg of ascorbic acid were weighed and dissolved into 10mL of deionized water, respectively, to obtain a 10mL of sodium borohydride solution with a concentration of 5×10⁻³mol/L and a 10mL of ascorbic acid solution with a concentration of 1×10⁻²mol/L. Under magnetic stirring, 0.08mL of sodium borohydride solution was firstly added to the chloroauric acid aqueous solution, after stirring for 5 minutes, 3.12 mL of ascorbic acid solution with a concentration of 1×10⁻²mol/L was then added to the chloroauric acid aqueous solution. After reaction for 30 minutes, 20mL of sol containing Au nanoparticles was obtained with an Au content of 5×10⁻³ mol/L.

Preparation of SiO₂@Au was described below.

10mL of sol containing Au nanoparticles (5×10⁻³mol/L) was pipetted and placed in a beaker, 2mL of PVP solution (0.1g/mL) was added, magnetically stirred for 8 hours to obtain a surface treated sol containing Au nanoparticles. 25mL of absolute ethanol, 5mL of ammonia, and 1.2mL of tetraethylorthosilicate were added to the surface treated sol containing Au nanoparticles with stirring. After reaction of 8 hours, a solid phase material was obtained by centrifugation, the solid phase material was washed and dried to obtain SiO₂@Au powder.

Preparation of Lu_{1.95}O₃: Eu_{0.05}³⁺@SiO₂@Au_{1×10}*₂ was described below.

3.4320g of Lu(CH₃COO)₃ and 0.0822g of Eu(CH₃COO)₃ were weighed and placed in a vessel, 50mL of mixed solution of ethanol and water with a volume ratio of 4:1 was added. 1.9212g of citric acid and 2.5g of polyethylene glycol 100 were added in a condition of 80°C water bath with stirring, the mixture was stirred for 2 hours to obtain a uniform and transparent sol. The SiO₂@Au powder was added, continually stirred for 2 hours to obtain a precursor sol. The precursor sol was dried for 20 hours at a temperature of 70°C to volatile solvent to obtain a xerogel, the obtained xerogel was then ground into a powder. The powder was placed in a high temperature box furnace and calcined at a constant temperature of 600°C for 2 hours, then calcined at 900°C for 4 hours, cooled to room temperature to obtain the luminescent material Lu_{1.95}O₃: Eu_{0.05}³⁺@SiO₂@Au_{1×10}-₂.

FIG. 2 is a graphical representation of cathodoluminescence spectrum under a voltage of 1.5kV of the luminescent material of Lu_{1.95}O₃: Eu_{0.05}³⁺@SiO₂@Au_{1×10}*₂ coating Au nanoparticles prepared in accordance with Example 1, and the luminescent material of Lu_{1.95}O₃: Eu_{0.05}³⁺@SiO₂ without coating Au nanoparticles. It can be seen from FIG. 2 that, at an emission peak of 612nm, the emission intensity of luminescent material of Lu_{1.95}O₃: Eu_{0.05}³⁺@SiO₂@Au_{1×10}-₂ coating Au nanoparticles is enhanced by 34% comparing to luminescent material of Lu_{1.95}O₃: Eu_{0.05}³⁺@SiO₂ without coating Au nanoparticles.

### Example 2

This example describes a process of preparation of Lu_{1.995}O₃:Dy_{0.005}³⁺@SiO₂@Pt_{5×10}-₃ by using sol-gel method.

Preparation of sol containing Pt nanoparticles was described below.

25.9mg of chloroplatinic acid (H₂PtCl₆•6H₂O) was dissolved in 17mL of deionized water. After the chloroplatinic acid was fully dissolved, 40.0mg of sodium citrate and 60.0mg of sodium lauryl sulfate were weighed and dissolved into the chloroplatinic acid aqueous solution under magnetic stirring. 1.9mg of sodium borohydride was weighed and dissolved into 10mL of deionized water to obtain 10 mL of sodium borohydride aqueous solution with a concentration of 5×10⁻³mol/L. 10mL of hydrazine hydrate solution (5×10⁻²mol/L) was prepared at the same time. Under magnetic stirring, 0.4mL of sodium borohydride solution was added dropwise to the chloroplatinic acid aqueous solution and stirred for 5 minutes, then 2.6mL of hydrazine hydrate (5×10⁻²mol/L) was added dropwise to the chloroplatinic acid aqueous solution. After reaction for 40 minutes, 10mL of sol containing Pt nanoparticles was obtained with a Pt content of 2.5×10⁻³mol/L.

Preparation of SiO₂@Pt was described below.

8mL of sol containing Pt nanoparticles (2.5×10⁻³mol/L) was pipetted and placed in a beaker, 4mL of PVP solution (0.02g/mL) was added, magnetically stirred for 18 hours to obtain a surface treated sol containing Pt nanoparticles. 20mL of absolute ethanol, 4mL of ammonia, and 1.4mL of tetraethylorthosilicate were added to the surface treated sol containing Pt nanoparticles with stirring. After reaction of 3 hours, a solid phase material was obtained by centrifugation, the solid phase material was washed and dried to obtain SiO₂@Pt powder.

Preparation of Lu_{1.995}O₃:Dy_{0.005}³⁺@SiO₂@Pt_{5×10}-₃ was described below.

2.3819g of Lu₂O₃ and 0.0056g of Dy₂O₃ were weighed and dissolved by heating in a container using 1mL of concentrated nitric acid and 1mL of deionized water. 50mL of mixed solution of ethanol and water with a volume ratio of 3:1 was added after cooling. 4.6108g of citric acid and 10.4g of polyethylene glycol 200 were added in a condition of 80°C water bath with stirring, the mixture was stirred for 2 hours to obtain a uniform and transparent sol. The SiO₂@Pt powder was added, continually stirred for 6 hours to obtain a precursor sol. The precursor sol was dried for 6 hours at a temperature of 150°C to volatile solvent to obtain a xerogel, the obtained xerogel was then ground into a powder. The powder was placed in a high temperature box furnace and calcined at a constant temperature of 500°C for 2 hours, then calcined at 1000°C for 4 hours, cooled to room temperature to obtain the luminescent material Lu_{1.995}O₃:Dy_{0.005}³⁺@SiO₂@Pt_{5×10}-₃.

### Example 3

This example describes a process of preparation of Lu_{1.92}O₃:Tb_{0.083}³⁺@SiO₂@Ag_{2.5×10}-₄ by using sol-gel method.

Preparation of sol containing Ag nanoparticles was described below.

3.4mg of silver nitrate (AgNO₃) was dissolved in 18.4mL of deionized water. After the silver nitrate was fully dissolved, 42mg of sodium citrate was weighed and dissolved into the silver nitrate aqueous solution under magnetic stirring. 5.7mg of sodium borohydride was weighed and dissolved into 10mL of deionized water to obtain a 10mL of sodium borohydride solution with a concentration of 1.5×10⁻²mol/L. Under magnetic stirring, 1.6mL of sodium borohydride solution (1.5×10mol/L) was added to the silver nitrate aqueous solution. After reaction for 10 minutes, 20mL of sol containing Ag nanoparticles was obtained with an Ag content of 1 × 10⁻³mol/L.

Preparation of SiO₂@Ag was described below.

1.2mL of sol containing Ag nanoparticles (1×10⁻³mol/L) was pipetted and placed in a beaker, 10mL of PVP solution (0.01g/mL) was added, magnetically stirred for 12 hours to obtain a surface treated sol containing Ag nanoparticles. 30mL of absolute ethanol, 7.2mL of ammonia, and 1.2mL of tetraethylorthosilicate were added to the surface treated sol containing Ag nanoparticles with stirring. After reaction of 6 hours, a solid phase material was obtained by centrifugation, the solid phase material was washed and dried to obtain SiO₂@Ag powder.

Preparation of Lu_{1.92}O₃:Tb_{0.08}³⁺@SiO₂@Ag_{2.5×10}-₄ was described below.

3.4646g of Lu(NO₃)₃ and 0.1380g of Tb(NO₃)₃ were weighed and placed in a vessel, 50mL of mixed solution of ethanol and water with a volume ratio of 8:1 was added. 7.6848g of citric acid and 5g of polyethylene glycol 10000 were added in a condition of 70°C water bath with stirring, the mixture was stirred for 4 hours to obtain a uniform and transparent sol. The SiO₂@Ag powder was added, continually stirred for 6 hours to obtain a precursor sol. The precursor sol was dried for 8 hours at a temperature of 120°C to volatile solvent to obtain a xerogel, the obtained xerogel was then ground into a powder. The powder was placed in a high temperature box furnace and calcined at a constant temperature of 500°C for 4 hours, then calcined at 900°C for 4 hours, cooled to room temperature to obtain the luminescent material.

FIG. 3 is a graphical representation of cathodoluminescence spectrum under a voltage of 3kV of the luminescent material of Lu_{1.92}O₃:Tb_{0.08}³⁺@SiO₂@Ag_{2.5×10}-₄ coating Ag nanoparticles prepared in accordance with Example 3, and the luminescent material of Lu_{1.92}O₃:Tb_{0.08}³⁺@SiO₂ without coating Ag nanoparticles. It can be seen from FIG. 3 that, at an emission peak of 544nm, the emission intensity of luminescent material of Lu_{1.92}O₃:Tb_{0.08}³⁺@SiO₂@Ag_{2.5×10}-₄ coating Ag nanoparticles is enhanced by 28.7% comparing to luminescent material of Lu_{1.92}O₃:Tb_{0.08}@SiO₂ without coating Ag nanoparticles.

### Example 4

This example describes a process of preparation of Lu_{1.99}O₃:Er_{0.01}³⁺@SiO₂@Pd_{1×10}-₅ by using sol-gel method.

Preparation of sol containing Pd nanoparticles was described below.

0.22mg of palladium chloride (PdCl₂•2H₂O) was dissolved in 19mL of deionized water. After the palladium chloride was fully dissolved, 11.0mg of sodium citrate and 4.0mg of sodium lauryl sulfate were weighed and dissolved into the palladium chloride aqueous solution under magnetic stirring. 3.8mg of sodium borohydride was weighed and dissolved into 10mL of deionized water to obtain a sodium borohydride reducing solution with a concentration of 1×10⁻²mol/L. Under magnetic stirring, 1mL of sodium borohydride solution with a concentration of 1×10⁻²mol/L was fast added to the palladium chloride aqueous solution. After reaction for 20 minutes, 20mL of sol containing Pd nanoparticles was obtained with a Pd content of 5×10⁻⁵mol/L.

Preparation of SiO₂@Pd was described below.

1.5mL of sol containing Pd nanoparticles (5×10⁻⁵mol/L) was pipetted and placed in a beaker, 8mL of PVP solution (0.005g/mL) was added, magnetically stirred for 16 hours to obtain a surface treated sol containing Pd nanoparticles. 40mL of absolute ethanol, 8mL of ammonia, and 1.65mL of tetraethylorthosilicate were added to the surface treated sol containing Pd nanoparticles with stirring. After reaction of 5 hours, a solid phase material was obtained by centrifugation, the solid phase material was washed and dried to obtain SiO₂@Pd powder.

Preparation of Lu_{1.99}O₃:Er_{0.01}³⁺@SiO₂@Pd_{1×10⁻5} was described below.

0.6211g Lu₂(CO₃)₃ and 0.5973g Er₂(CO₃)₃ were weighed and dissolved in a container using 5mL of dilute nitric acid by heating, after cooling, 50mL of mixed solution of ethanol and water with a volume ratio of 3:1 was added. 5.3793g of citric acid and 8.25g of polyethylene glycol 200 were added in a condition of 65°C water bath with stirring, the mixture was stirred for 4 hours to obtain a uniform and transparent sol. The SiO₂@Pd powder was added, continually stirred for 6 hours to obtain a precursor sol. The precursor sol was dried for 8 hours at a temperature of 100°C to volatile solvent to obtain a xerogel, the obtained xerogel was then ground into a powder. The powder was placed in a high temperature box furnace and calcined at a constant temperature of 600°C for 3 hours, then calcined at 800°C for 2 hours, cooled to room temperature to obtain the luminescent material Lu_{1.99}O₃:Er_{0.01}³⁺@SiO₂@Pd_{1×10}-₅.

### Example 5

This example describes a process of preparation of Lu_{1.999}O₃:Sm_{0.001}³⁺@SiO₂@Cu_{1×10⁻4} by using sol-gel method.

Preparation of sol containing Cu nanoparticles was described below.

1.6mg of copper nitrate was dissolved in 16mL of ethanol. After the copper nitrate was fully dissolved, 12mg of PVP was added with stirring. 0.4mg of sodium borohydride was dissolved into 10mL of ethanol to obtain a sodium borohydride alcoholic solution with a concentration of 1×10⁻³mol/L. 4mL of sodium borohydride alcoholic solution was added dropwise to the copper nitrate solution. After stirring and reacting for 10 minutes, 20mL of sol containing Cu nanoparticles was obtained with a Cu content of 4×10⁻⁴mol/L.

Preparation of SiO2@Cu was described below.

1.5mL of sol containing Cu nanoparticles (4×10⁻⁴mol/L) was pipetted and placed in a beaker, 5mL of PVP solution (0.03g/mL) was added, magnetically stirred for 10 hours to obtain a surface treated sol containing Cu nanoparticles. 15mL of absolute ethanol, 3mL of ammonia, and 1.4mL of tetraethylorthosilicate were added to the surface treated sol containing Cu nanoparticles with stirring. After reaction of 4 hours, a solid phase material was obtained by centrifugation, the solid phase material was washed and dried to obtain SiO₂@Cu powder.

Preparation of Lu_{1.999}O₃:Sm_{0.001}³⁺@SiO₂@Cu_{1×10}-₄ was described below.

3.3742g LuCl₃ and 0.0015g SmCl₃ were weighed and placed in a vessel, 50mL of mixed solution of ethanol and water with a volume ratio of 4:1 was added. 6.9163g of citric acid and 2.5g of polyethylene glycol 20000 were added in a condition of 60°C water bath with stirring, the mixture was stirred for 6 hours to obtain a uniform and transparent sol. The SiO₂@Cu_{1×10}-₄ powder was added, continually stirred for 6 hours to obtain a precursor sol. The precursor sol was dried for 15 hours at a temperature of 80°C to volatile solvent to obtain a xerogel, the obtained xerogel was then ground into a powder. The powder was placed in a high temperature box furnace and calcined at a constant temperature of 400°C for 3 hours, then calcined at 700°C for 5 hours, cooled to room temperature to obtain the luminescent material Lu_{1.999}O₃:Sm_{0.001}³⁺@SiO₂@Cu_{1×10}*₄.

### Example 6

This example describes a process of preparation of Lu_{1.99}O₃:Ho_{0.01}³⁺@SiO₂@Ag_{5×10}-₄ by using sol-gel method.

Preparation of sol containing Ag nanoparticles was described below.

0.0429g of AgNO₃, 0.0733g of sodium citrate, and 0.05g of PVP were weighed and formulated into 10mL of 0.025 mol/L of AgNO₃ aqueous solution, 10mL of 0.025 mol/L of sodium citrate aqueous solution, 10mL of 5mg/mL of PVP aqueous solution, respectively. 2mL of AgNO₃ aqueous solution was added into 30mL of deionized water, 4mL of PVP aqueous solution was then added with stirring. After the mixture solution was heated to 100°C, 4mL of sodium citrate aqueous solution was added dropwise and reacted for 15 minutes to obtain 40mL of sol containing Ag nanoparticles with a concentration of 1 × 10⁻³mol/L.

Preparation of SiO₂@Ag was described below.

5mL of sol containing Ag nanoparticles (1×10⁻³mol/L) was pipetted and placed in a beaker, 6mL of PVP solution (0.06g/mL) was added, magnetically stirred for 15 hours to obtain a surface treated sol containing Ag nanoparticles. 35mL of absolute ethanol, 8mL of ammonia, and 1.5mL of tetraethylorthosilicate were added to the surface treated sol containing Ag nanoparticles with stirring. After reaction of 2 hours, a solid phase material was obtained by centrifugation, the solid phase material was washed and dried to obtain SiO₂@Ag powder.

Preparation of <Lu_{1.99}O₃:Ho_{0.0}³⁺@SiO₂@Ag_{5×10}-₄ was described below. 3.6655g Lu₂(C₂O₄)₃ and 0.0178g Ho₂(C₂O₄)₃ were weighed, wetted and dissolved by heating in a container using 2mL of concentrated nitric acid and 3mL of deionized water. 50mL of mixed solution of ethanol and water with a volume ratio of 3:1 was added after cooling. 9.2217g of citric acid and 5.5g of polyethylene glycol 4000 were added in a condition of 70°C water bath with stirring, the mixture was stirred for 4 hours to obtain a uniform and transparent sol. The SiO₂@Ag powder was added, continually stirred for 6 hours to obtain a precursor sol. The precursor sol was dried for 12 hours at a temperature of 100°C to volatile solvent to obtain a xerogel, the obtained xerogel was then ground into a powder. The powder was placed in a high temperature box furnace and calcined at a constant temperature of 600°C for 1 hour, then calcined at 600°C for 8 hours, cooled to room temperature to obtain the luminescent material Lu_{1.99}O₃:Ho_{0.01}³⁺@SiO₂@Ag_{5×10⁻4}.

### Example 7

This example describes a process of preparation of Lu_{1.8}O₃:Tb_{0.2}³⁺@SiO₂@Ag_{2.5×10-4} by using sol-gel method.

Preparation of sol containing Ag nanoparticles was described below.

3.4mg of silver nitrate (AgNO₃) was dissolved in 18.4mL of deionized water. After the silver nitrate was fully dissolved, 42mg of sodium citrate was weighed and dissolved into the silver nitrate aqueous solution under magnetic stirring. 5.7mg of sodium borohydride was weighed and dissolved into 10mL of deionized water to obtain a 10mL of sodium borohydride solution with a concentration of 1.5×10⁻²mol/L. Under magnetic stirring, 1.6mL of sodium borohydride solution (1.5×10⁻²mol/L) was added to the silver nitrate aqueous solution. After reaction for 10 minutes, 20mL of sol containing Ag nanoparticles was obtained with an Ag content of 1 × 10⁻³ mol/L.

Preparation of SiO₂@Ag was described below.

1.2mL of sol containing Ag nanoparticles (1×10⁻³mol/L) was pipetted and placed in a beaker, 10mL of PVP solution (0.01g/mL) was added, magnetically stirred for 12 hours to obtain a surface treated sol containing Ag nanoparticles. 30mL of absolute ethanol, 7.2mL of ammonia, and 1.2mL of tetraethylorthosilicate were added to the surface treated sol containing Ag nanoparticles with stirring. After reaction of 6 hours, a solid phase material was obtained by centrifugation, the solid phase material was washed and dried to obtain SiO₂@Ag powder.

Preparation of Lu_{1.8}O₃:Tb_{0.2}³⁺@SiO₂@Ag_{2.5×10-4} was described below.

3.2480g of Lu(NO₃)₃ and 0.3450g of Tb(NO₃)₃ were weighed and placed in a vessel, 50mL of mixed solution of ethanol and water with a volume ratio of 8:1 was added. 7.6848g of citric acid and 5g of polyethylene glycol 10000 were added in a condition of 70°C water bath with stirring, the mixture was stirred for 4 hours to obtain a uniform and transparent sol. The SiO₂@Ag powder was added, continually stirred for 6 hours to obtain a precursor sol. The precursor sol was dried for 8 hours at a temperature of 120°C to volatile solvent to obtain a xerogel, the obtained xerogel was then ground into a powder. The powder was placed in a high temperature box furnace and calcined at a constant temperature of 500°C for 3 hours, then calcined at 800°C for 8 hours, cooled to room temperature to obtain the luminescent material Lu_{1.8}O₃:Tb_{0.2}³⁺@SiO₂@Ag_{2.5×10-4}.

### Example 8

This example describes a process of preparation of Lu_{1.99}O₃:Tm_{0.01}³⁺@SiO₂@(Ag0.5/Au0.5)_{1.25×10-3} by using sol-gel method.

Preparation of sol containing Ag0.5/Au0.5 nanoparticles was described below.

6.2mg of chloroauric acid (AuCl₃•HCl•4H₂O) and 2.5mg of AgNO₃ were dissolved in 28mL of deionized water. After they were fully dissolved, 22mg of sodium citrate and 20mg of PVP were weighed and added to the mixture solution under magnetic stirring. 5.7mg of sodium borohydride was dissolved into 10mL of deionized water to obtain a sodium borohydride aqueous solution with a concentration of 1.5×10⁻²mol/L. 2mL of sodium borohydride aqueous solution (1.5×10⁻²mol/L) was added to the mixture solution under a magnetic stirring environment. After reacting for 20 minutes, 30mL of sol containing Ag/Au nanoparticles was obtained with a sum metal content of 1×10⁻³mol/L.

Preparation of SiO₂@(Ag0.5/Au0.5) was described below.

5mL of sol containing Ag0.5/Au0.5 nanoparticles (1×10⁻³mol/L) was pipetted and placed in a beaker, 10mL of PVP solution (0.01g/mL) was added, magnetically stirred for 12 hours to obtain a surface treated sol containing Ag0.5/Au0.5 nanoparticles. 30mL of absolute ethanol, 6mL of ammonia, and 1mL of tetraethylorthosilicate were added to the surface treated sol containing Ag0.5/Au0.5 nanoparticles with stirring. After reaction of 5 hours, a solid phase material was obtained by centrifugation, the solid phase material was washed and dried to obtain SiO₂@(Ag0.5/Au0.5) powder.

Preparation of Lu_{1.99}O₃:Tm_{0.01}³⁺@SiO₂@(Ag0.5/Au0.5)_{1.25×10-3} was described below.

2.8727g of Lu(NO₃)₃ and 0.0142g of Tb(NO₃)₃ were weighed and placed in a vessel, 50mL of mixed solution of ethanol and water with a volume ratio of 3:1 was added. 1.5369g of citric acid and 10g of polyethylene glycol 4000 were added in a condition of 70°C water bath with stirring, the mixture was stirred for 3 hours to obtain a uniform and transparent sol. The SiO₂@(Ag0.5/Au0.5) powder was added, continually stirred for 8 hours to obtain a precursor sol. The precursor sol was dried for 12 hours at a temperature of 100°C to volatile solvent to obtain a xerogel, the obtained xerogel was then ground into a powder. The powder was placed in a high temperature box furnace and calcined at a constant temperature of 500°C for 6 hours, then calcined at 1000°C for 2 hours, cooled to room temperature to obtain the luminescent material Lu_{1.99}O₃:Tm_{0.01}³⁺@SiO₂@(Ag0.5/Au0.5)_{1.25×10-3}.

Although the present invention has been described with reference to the embodiments thereof and the best modes for carrying out the present invention, it is apparent to those skilled in the art that a variety of modifications and changes may be made without departing from the scope of the present invention, which is intended to be defined by the appended claims.

## Claims

1. A lutecium oxide luminescent material having the following chemical formula:
Lu₂₋ₓO₃:Ln³⁺@SiO₂@M_{y},
wherein Ln is one element selected from the group consisting of Eu, Tb, Dy, Sm, Er, Ho,
and Tm;
M is at least one metal nanoparticles selected from the group consisting of Ag, Au, Pt, Pd,
and Cu;
0<x≤0.02;
y is a molar ratio between M and Lu₂₋ₓO₃:Lnₓ³⁺, 0<y≤10⁻²;
@ represents coating; the lutecium oxide luminescent material uses M as a core, SiO₂ as an inner shell, and Lu₂₋ₓ@₃:Lnₓ³⁺ as an outer shell.

2. The lutecium oxide luminescent material according to claim 1, wherein 0.001≤x≤0.08.

3. The lutecium oxide luminescent material according to claim 1, wherein 1×10⁻⁵≤y≤5×10⁻².

4. A method of preparing a lutecium oxide luminescent material, comprising the following steps:
preparing a sol containing M, wherein M is at least one metal nanoparticles selected from the group consisting of Ag, Au, Pt, Pd and Cu;
surface-treating the sol containing M, then adding absolute ethanol and aqueous ammonia with stirring, then adding tetraethyl orthosilicate, reacting, separating and drying to obtain SiO₂ powder coating M;
preparing a ethanol aqueous solution containing Lu³⁺ and Ln³⁺ according to a stoichiometry ratio in a chemical formula: Lu₂₋ₓO₃:Lnₓ³⁺@SiO₂@M_{y}, adding citric acid and polyethylene glycol, stirring at a temperature of 60°C to 80°C for 2 to 6 hours to obtain a sol, adding the SiO₂ powder coating M, stirring for 2 to 12 hours to obtain a precursor sol, wherein Ln is one element selected from the group consisting of Eu, Tb, Dy, Sm, Er, Ho, and Tm; 0<x≤0.02;
drying the precursor sol to obtain a gel, grinding the gel, then heating the gel, cooling to obtain the lutecium oxide luminescent material having the following chemical formula: Lu₂₋ₓO₃:Lnₓ³⁺@SiO₂@M_{y}, wherein @ represents coating; the lutecium oxide luminescent material uses M as a core, SiO₂ as an inner shell, and Lu₂₋ₓO₃:Lnₓ³⁺ as an outer shell; y is a molar ratio between M and Lu₂₋ₓO₃:Lnₓ³⁺, 0<y≤10⁻².

5. The method of preparing the lutecium oxide luminescent material according to claim 4, wherein the preparing the sol containing M comprises:
mixing and reacting a salt solution of at least one of Ag, Au, Pt, Pd, and Cu, an additive,
and a reducing agent for 10 minutes to 5 minutes to obtain the sol containing M nanoparticles;
wherein a concentration of the salt solution of at least one of Ag, Au, Pt, Pd, and Cu ranges from 1 × 10⁻³mol/L to 5×10⁻²mol/L;
the additive is at least one selected from the group consisting of polyvinyl pyrrolidone,
sodium citrate, cetyl trimethyl ammonium bromide, sodium lauryl sulfate, and sodium dodecyl sulfate; a concentration of additive in the sol containing M ranges from 1×10⁻⁴g/mL to 5×10⁻²g/mL;
the reducing agent is at least one selected from the group consisting of hydrazine hydrate,
ascorbic acid, sodium citrate, and sodium borohydride; a molar ratio of the reducing agent to a metal ion in the salt solution of at least one of Ag, Au, Pt, Pd, and Cu ranges from 3.6:1 to 18:1.

6. The method of preparing the lutecium oxide luminescent material according to claim 4, wherein the surface-treating the sol containing M comprises:
adding the sol containing M to a polyvinyl pyrrolidone aqueous solution having a concentration of 0.005g/ml to 0.1g/ml and stirring for 8 to 18 hours.

7. The method of preparing the lutecium oxide luminescent material according to claim 4, wherein in the step of obtaining SiO₂ powder coating M, a volume ratio of absolute ethanol, ammonia, and tetraethyl orthosilicate ranges from 15 to 40:3 to 8:1 to 1.65.

8. The method of preparing the lutecium oxide luminescent material according to claim 4, wherein a volume ratio of ethanol to water in the ethanol aqueous solution ranges from 3 to 8:1;
a molar ratio of citric acid to a sum of Lu³⁺ and Ln³⁺ ranges from 1 to 5:1;
a concentration of polyethylene glycol ranges from 0.05g/mL to 0.20g/mL.

9. The method of preparing the lutecium oxide luminescent material according to claim 4, wherein the drying the precursor sol to obtain the gel comprises: drying the precursor sol at a temperature of 70°C to 150°C for 8 hours to 20 hours.

10. The method of preparing the lutecium oxide luminescent material according to claim 4, wherein the heating the gel comprises: preheating the ground gel at a temperature of 400°C to 600°C for 1 hour to 6 hours, and then calcining the gel at a temperature of 600°C to 1000°C for 2 hours to 8 hours.
